# EUROPEAN PATENT SPECIFICATION

(11) **EP 2 852 212 B1**
(45) Date of publication and mention of the grant of the patent: **29.03.2017**
(21) Application number: 12879094.6
(22) Date of filing: 12.06.2012
(51) Int. Cl.: H04W 28/16, H04L 29/06, H04L 12/14, H04L 12/26, H04Q 3/00, H04L 29/08

(54) **METHOD, SYSTEM AND DEVICE FOR PROCESSING DATA PACKET**
VERFAHREN, SYSTEM UND VORRICHTUNG ZUR VERARBEITUNG VON DATENPAKETEN
PROCÉDÉ, SYSTÈME ET DISPOSITIF DE TRAITEMENT DE PAQUET DE DONNÉES

(43) Date of publication of application: 25.03.2015
(60) Divisional application: 16207267.2
(73) Proprietor: Huawei Technologies Co., Ltd., Longgang District Shenzhen, Guangdong 518129 (CN)
(72) Inventor: JIN, Weisheng, Shenzhen Guangdong 518129 (CN)
(74) Representative: Gill Jennings & Every LLP
(86) International application number: PCT/CN2012/076769
(87) International publication number: WO 2013/185288

(56) References cited:
- CN-A- 101 404 650
- CN-A- 101 572 718
- CN-A- 101 924 781
- US-A1- 2008 307 081
- US-A1- 2010 054 257
- US-A1- 2011 202 491
- US-A1- 2011 276 442
- US-A1- 2011 314 145
- US-A1- 2011 320 555

## Description

### TECHNICAL FIELD

The present invention relates to communications technologies, and in particular, to a packet processing method, system, and device.

### BACKGROUND

With the evolution of mobile communications technologies, in the current mobile communications, a user not only can use services provided by a mobile operator and a mobile service provider but also already can use almost all Internet services with the support of Internet applications for mobile networks, which is the same as fixed broadband communications. Meanwhile, with the development of software and hardware platforms of terminals, it is already very popular to simultaneously run multiple applications (application) or processes (process) that access a network on a multi-tasking operating system of a terminal. On the operating system, due to reasons such as human computer interaction, the applications or processes may be in a foreground (foreground) or background (background) state. In addition, due to differences in a processor and memory resource occupation, the applications or processes in the foreground or background state may further be subdivided into different states, such as background running and background suspension. A foreground application or process is generally more sensitive to user experience.

However, when a core network gateway or a mobile access network executes local service quality control or air interface scheduling, and when an application or a process in a background state occupies too many network resources, in the case of limited network resources, an application or a process in a foreground state of a same user may fail to obtain sufficient resources or a network response may be not timely, and an application or a process in a foreground state of a different user sharing a same network resource may also fail to obtain sufficient resources or a network response may be not timely. In addition, a media source node and a content delivery network through which a data media stream may pass during transmission do not adjust a media coding rate according to the different state of the application or the process, and therefore the network transmission efficiency is not high.

US 2008/0307081 describes an approach to managing non-session-based services.

US 2011/0202491 describes a method of operating a policy and charging rules node.

US 2011/0314145 describes a method of managing network service usage activity.

### SUMMARY

The present invention provides a packet processing method, system, and device to enable an application or a process in a foreground state of a same user or an application or a process in a foreground state of a different user of a same network resource to obtain sufficient or more resources or enable a network response to be more timely in the case of limited network resources, and effectively improve the network transmission efficiency.

In one aspect, there is provided a packet processing method, comprising:
acquiring a description of an application and a state of the application;
generating a policy and charging control rule according to prestored configuration information, the state of the application, and the description of the application;
acquiring a packet that matches the description of the application; and
according to the policy and charging control rule, performing service quality control of network resources for a media data stream in which the matched packet is located or performing coding processing for a media data stream in which the matched packet is located;
wherein after acquiring a packet that matches the description of the application, the method further comprises:
   acquiring a service information identifier corresponding to the matched packet, and encapsulating the service information identifier in the matched packet; and
   sending the encapsulated and matched packet to a fixed network or a mobile access network, so that the fixed network or the mobile access network may perform, according to the service information identifier of the matched packet, service quality control of network resources for the media data stream in which the matched packet is located or perform, according to the service information identifier of the matched packet, coding processing for the media data stream in which the matched packet is located; wherein:
      the service information identifier comprises the state of the application or the state of the application and one or a combination of the following: a service type of the matched packet, a user priority, and an operator policy;
wherein performing coding processing comprises:
   when the state of the application is a foreground state, improving a coding rate of the media data stream in which the matched packet is located; and
   when the state of the application is in a background state, reducing a coding rate of the media data stream in which the matched packet is located.

In another aspect, there is provided a network-side device, comprising:
an acquiring module, configured to acquire a description of an application and a state of the application;
a policy and charging control function, configured to generate a policy and charging control rule according to prestored configuration information and the state of the application and the description of the application that are acquired by the acquiring module; and
a processing module, configured to acquire a packet that matches the description of the application acquired by the acquiring module, and according to the policy and charging control rule generated by the policy and charging control function, perform service quality control of network resources for a media data stream in which the matched packet is located or perform coding processing for a media data stream in which the matched packet is located;
wherein the device further comprises:
   encapsulation processing module, configured to, after acquiring a packet that matches the description of the application, acquire a service information identifier corresponding to the matched packet, and encapsulating the service information identifier in the matched packet; and
   send the encapsulated and matched packet to a fixed network or a mobile access network, so that the fixed network or the mobile access network may perform, according to the service information identifier of the matched packet, service quality control of network resources for the media data stream in which the matched packet is located or perform, according to the service information identifier of the matched packet, coding processing for the media data stream in which the matched packet is located; wherein:
the service information identifier comprises the state of the application or the state of the application and one or a combination of the following: a service type of the matched packet, a user priority, and an operator policy;
wherein performing coding processing comprises:
   when the state of the application is a foreground state, improving a coding rate of the media data stream in which the matched packet is located; and
   when the state of the application is in a background state, reducing a coding rate of the media data stream in which the matched packet is located.

Technical effects of the present invention are as follows: A description of an application and a state of the application are acquired, a packet that matches the description of the application is acquired, and according to the state of the application, service quality control of network resources is performed for a media data stream in which the matched packet is located or coding processing is performed for a media data stream in which the matched packet is located; because differential processing may be performed for a media data stream in which the packet that matches the description of the application in a different application state is located, an application or a process in a foreground state of a same user or an application or a process in a foreground state of a different user of a network-side device provided above.

In one aspect, another packet processing method is provided, including:
wherein the background state is one of the following: background running, background suspension, screen lockup, screensaver, screen off, and a state that a user terminal is not used by a user.

In one aspect, another packet processing method is provided, wherein when the state of the application is a foreground state, the performing, according to the policy and charging control rule, service quality control of network resources for a media data stream in which the matched packet is located comprises:
improving a bandwidth of the media data stream in which the matched packet is located; and/or
improving a scheduling priority of the media data stream in which the matched packet is located; and
the performing, according to the state of the application, coding processing for a media data stream in which the matched packet is located comprises:
   improving a coding rate of the media data stream in which the matched packet is located.

In one aspect, another packet processing method is provided, wherein when the state of the application is a background state, the performing, according to the policy and charging control rule, service quality control of network resources for a media data stream in which the matched packet is located comprises:
reducing a bandwidth of the media data stream in which the matched packet is located; and/or
reducing a scheduling priority of the media data stream in which the matched packet is located; and
the performing, according to the state of the application, coding processing for a media data stream in which the matched packet is located comprises:
   reducing a coding rate of the media data stream in which the matched packet is located.

In one aspect, another packet processing method is provided,wherein the state of the application comprises a foreground state and a background state, and the background state comprises one of the following: background running, background suspension, screen lockup, screensaver, screen off, and a state that a user terminal is not used by a user.

In one aspect, a network-side device is provided, including:
acquiring a state of an application; and
sending the state of the application to a network-side device, so that the network-side device performs, according to the state of the application, service quality control of network resources for a media data stream in which a packet that matches an acquired description of the application is located or performs, according to the state of the application, coding processing for a media data stream in which the matched packet is located.
wherein the method further comprises:
   acquiring a description of the application; and
   then, the sending the state of the application to a network-side device comprises:
      sending the description of the application and the state of the application to the network-side device, wherein:
         the description of the application comprises an identifier of the application or the identifier of the application and a stream description of the application.
         wherein the sending the state of the application to a network-side device or sending the description of the application and the state of the application to the network-side device comprises:
            sending an application layer message at a user plane of a user terminal to the network-side device, so that the network-side device parses a first packet in the application layer message, captures a packet carrying a network-specific address, and acquires the description of the application and the state of the application from the packet carrying the network-specific address; or
            sending an RRC message carrying the description of the application and the state of the application to the network-side device, so that the network-side device acquires the description of the application and the state of the application from the RRC message; or
            sending a non-access-stratum message carrying the description of the application and the state of the application to a mobility management entity, wherein the mobility management entity sends a control plane message carrying the description of the application and the state of the application to the network-side device, so that the network-side device acquires the description of the application and the state of the application from the control plane message; or
            sending the state of the application or the identifier of the application and the state of the application by using an application layer protocol of the application; or
            sending the state of the application or the identifier of the application and the state of the application by using an application layer protocol of a specified application.

In one aspect, a user terminal is provided, including:
an acquiring module, configured to acquire a state of an application; and
a sending module, configured to send the state of the application acquired by the acquiring module to a network-side device, so that the network-side device performs, according to the state of the application, service quality control of network resources for a media data stream in which a packet that matches an acquired description of the application is located or performs, according to the state of the application, coding processing for a media data stream in which the matched packet is located.
wherein the acquiring module is further configured to acquire the description of the application; and
then, the sending module is specifically configured to send the description of the application and the state of the application that are acquired by the acquiring module to the network-side device, wherein:
   the description of the application comprises an identifier of the application or the identifier of the application and a stream description of the application.
   wherein the sending module is specifically configured to send an application layer message at a user plane of the user terminal to the network-side device, so that the network-side device parses a first packet in the application layer message, captures a packet carrying a network-specific address, and acquires the description of the application and the state of the application from the packet carrying the network-specific address; or
   the sending module is specifically configured to send an RRC message carrying the description of the application and the state of the application to the network-side device, so that the network-side device acquires the description of the application and the state of the application from the RRC message; or
   the sending module is specifically configured to send a non-access-stratum message carrying the description of the application and the state of the application to a mobility management entity, wherein the mobility management entity sends a control plane message carrying the description of the application and the state of the application to the network-side device, so that the network-side device acquires the description of the application and the state of the application from the control plane message; or
   the sending module is specifically configured to send the state of the application or the identifier of the application and the state of the application by using an application layer protocol of the application; or
   the sending module is specifically configured to send the state of the application or the identifier of the application and the state of the application by using an application layer protocol of a specified application.

Technical effects of the present invention are as follows: A description of an application and a state of the application are acquired, a packet that matches the description of the application is acquired, and according to the state of the application, service quality control of network resources is performed for a media data stream in which the matched packet is located or coding processing is performed for a media data stream in which the matched packet is located; because differential processing may be performed for a media data stream in which the packet that matches the description of the application in a different application state is located, an application or a process in a foreground state of a same user or an application or a process in a foreground state of a different user of a same network resource can obtain sufficient or more resources or a network response may be more timely in the case of limited network resources; and the network transmission efficiency is effectively improved.

### BRIEF DESCRIPTION OF DRAWINGS

To illustrate the technical solutions in the embodiments of the present invention more clearly, the following briefly introduces the accompanying drawings required for describing the embodiments. Apparently, the accompanying drawings in the following description show merely some embodiments of the present invention, and persons of ordinary skill in the art may still derive other drawings from these accompanying drawings without creative efforts.
FIG. 1 is a flowchart of an embodiment of a packet processing method according to the present invention;
FIG. 2 is a flowchart of another embodiment of a packet processing method according to the present invention;
FIG. 3 is a flowchart of still another embodiment of a packet processing method according to the present invention;
FIG. 4 is a schematic structural diagram of an embodiment of a network-side device according to the present invention;
FIG. 5 is a schematic structural diagram of another embodiment of a network-side device according to the present invention;
FIG. 6 is a schematic structural diagram of still another embodiment of a network-side device according to the present invention; and
FIG. 7 is a schematic structural diagram of an embodiment of a user terminal according to the present invention.

### DESCRIPTION OF EMBODIMENTS

To make the objectives, technical solutions, and advantages of the present invention more comprehensible, the following further describes the present invention in detail with reference to the accompanying drawings. Apparently, the described embodiments are merely a part rather than all of the embodiments of the present invention. All other embodiments obtained by persons of ordinary skill in the art based on the embodiments of the present invention without creative efforts shall fall within the protection scope of the present invention.

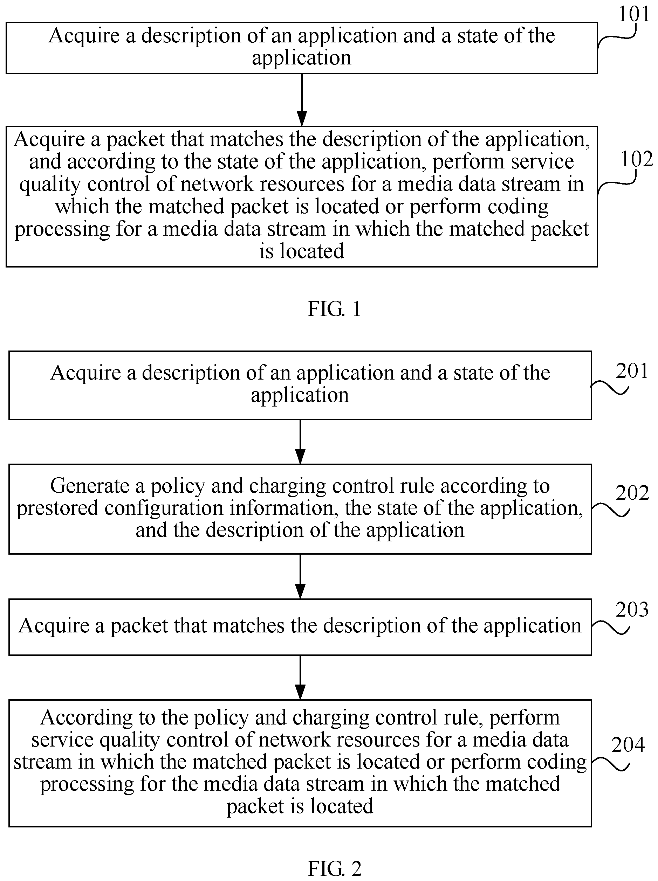

FIG. 1 is a flowchart of an embodiment of a packet processing method according to the present invention. As shown in FIG. 1, an executor of the method of this embodiment is a mobile access network gateway, and the method includes:
Step 101: Acquire a description of an application and a state of the application.

In this embodiment, preferably, the description of the application may be an identifier of the application or a stream description of the application. The state of the application may be classified into a foreground state and a background state, and the background state may be one of the following: background running, background suspension, screen lockup, screensaver, screen off, and a state that a user terminal is not used by a user.

In addition, it should be noted that an application may invoke multiple processes or be formed by multiple processes, and therefore the application is uniformly used to represent an application and a process in each embodiment of the present invention.

Step 102: Acquire a packet that matches the description of the application, and according to the state of the application, perform service quality control of network resources for a media data stream in which the matched packet is located or perform coding processing for a media data stream in which the matched packet is located.

In this embodiment, a description of an application and a state of the application are acquired, a packet that matches the description of the application is acquired, and according to the state of the application, service quality control of network resources is performed for a media data stream in which the matched packet is located or coding processing is performed for a media data stream in which the matched packet is located; because differential processing may be performed for a media data stream in which the packet that matches the description of the application in a different application state is located, an application or a process in a foreground state of a same user or an application or a process in a foreground state of a different user of a same network resource can obtain sufficient or more resources or a network response may be more timely in the case of limited network resources; and the network transmission efficiency is effectively improved.

Further, in another embodiment of the present invention, based on the method embodiment shown in FIG. 1, a specific implementation manner of step 101 may be one of the following manners:
First: Parsea first packet in an application layer message at a user plane of the user terminal, capture a packet carrying a network-specific address, and acquire the description of the application and the state of the application from the packet carrying the network-specific address.

Specifically, the network-specific address may be queried and obtained through a domain name server by using an address domain name of a mobile access network gateway acquired when the user terminal interacts with a mobile access network in an earlier stage, or may be a fixed IP (plus a port number) address, for example, 192.168.254.254 (:8899). In addition, the network-specific address may be specifically carried in a header of the first packet.

Second: Acquire the description of the application and the state of the application from a received radio resource control protocol (Radio Resource Control; RRC for short) message that is sent by the user terminal.

Specifically, the user terminal sends the description of the application and the state of the application by invoking a radio protocol stack of the user terminal and using the RRC message. More specifically, the RRC message is a radio resource control connection reconfiguration message (RRC Connection Reconfiguration), or a radio resource control connection setup message (RRC Connection Setup), a radio resource control connection re-establishment message (RRC Connection Re-establishment), or the like. In addition, more preferably, the description of the application and the state of the application may also be carried in a radio resource configuration cell of dedicated signaling.

Third: Acquire the description of the application and the state of the application from a received control plane message that is sent by a mobility management entity.

Specifically, the user terminal may send the description of the application and the state of the application to the mobility management entity by using a non-access-stratum (Non-Access-Stratum; NAS for short) message between the user terminal and the mobility management entity, and then the mobility management entity sends them to the mobile access network by using the control plane message. More specifically, the user terminal sends them by invoking the radio protocol stack of the user terminal and using the NAS message, where the NAS message is used to transmit information such as PDN connection setup and modification and bearer resource allocation or modification between an MME and a UE. Alternatively, the user terminal may also carry the description of the application and the state of the application in a cell of the dedicated signaling. After receiving the description of the application and the state of the application that are sent by the user terminal, the mobility management entity sends the description of the application and the state of the application to the mobile access network by using the control plane message (for example, by using the S1 Application Protocol (S1 Application Protocol; S1AP for short), Radio Access Network Application Part (Radio Access Network Application Part; RANAP for short), or Base Station Subsystem General Packet Radio Service technology (General Packet Radio Service; GPRS for short) Protocol (Base Station Subsystem GPRS Protocol; BSSGP for short)) between the mobility management entity and the mobile access network.

Fourth: Receive the identifier of the application and the state of the application that are sent by the user terminal by using an application layer protocol of the application; or
receive the state of the application that is sent by the user terminal by using the application layer protocol of the application, and identify received packets, so as to acquire the identifier of the application or the stream description of the application.

Specifically, the state of the application of the user terminal or the state of the application and the identifier of the application are carried by the application layer protocol of the application. Taking that the application layer protocol is the Hypertext Transport Protocol (Hypertext Transport Protocol; HTTP for short) protocol as an example, a detailed description is as follows:
Preferably, when sending the foregoing request to the mobile access network by using an application layer signaling message such as FORESTATUS or BACKSTATUS, the user terminal may directly indicate an application state of a user terminal application (including a Web application, a web platform application, or a web application page) that accesses a URI. The URI is a network resource that the application accesses.

Alternatively, the application state of the user terminal application that accesses the URI is indicated by using an application layer signaling message such as STATUS, GET, or HEAD, adding a new request header such as Appstatus-foreground and Appstatus-background into the application layer signaling message, and sending a request attached with the request header to the mobile access network.

In addition, the state of the application may also be carried by using another field of the HTTP protocol; or similar extension is performed by using another application layer protocol, for example, the File Transfer Protocol (File Transfer Protocol; FTP for short), various Peer-to-Peer (Peer-to-Peer; P2P) protocols, the Independent Computing Architecture (Independent Computing Architecture, ICA for short) protocol, the Remote Desktop Protocol (Remote Desktop Protocol; RDP for short), or the like, so as to support sending of the state of the application. The another application layer protocol is not enumerated herein.

Fifth: Receive the identifier of the application and the state of the application that are sent by the user terminal by using an application layer protocol of a specified application; or
receive the state of the application that is sent by the user terminal by using the application layer protocol of the specified application, and identify a second packet in the application layer message at the user plane of the user terminal, so as to acquire the identifier of the application or the stream description of the application.

In this embodiment, the second packet is similar to the first packet, and a difference lies in that: An IP address carried in the header of the first packet is a network-specific address; and an IP address carried in a header of the second packet is an IP address acquired by the terminal by resolving its domain name.

In this embodiment, a specified application may be created on the user terminal, and the state of the application or the state of the application and the identifier of the application that need to be sent are sent by using an application layer protocol of the specified application. It should be noted that the application layer protocol of the specified application may be FTP, a P2P protocol, the ICA protocol, RDP, or the like, which is not enumerated herein.

Further, in still another embodiment of the present invention, based on the foregoing embodiments, a specific implementation manner of acquiring a packet that matches the description of the application in step 102 is one of the following two manners:
First: When a description of an application is an identifier of the application, parse received packets to acquire service types or host addresses of the received packets, and acquire a packet that matches the identifier of the application from the received packets according to a mapping relationship between an identifier of an application and a service type or a mapping relationship between an identifier of an application and a host address.

Specifically, the received packets may be parsed by using a deep packet inspection (Deep Packet Inspection; DPI for short) function.

Second: When a description of an application is a stream description of the application, acquire a packet that matches the stream description of the application directly.

Further, preferably, a specific implementation manner of performing, according to the state of the application, service quality control of network resources for the media data stream in which the matched packet is located or performing, according to the state of the application, coding processing for the media data stream in which the matched packet is located in step 102 is one of the following manners:
When the state of the application is the foreground state, a bandwidth of the media data stream in which the matched packet is located may be improved, that is, a bandwidth for the application to access a network may be improved; and/or a scheduling priority of the media data stream in which the matched packet is located may be improved; or
   when the state of the application is the foreground state, a coding rate of the media data stream in which the matched packet is located may be improved; or
   when the state of the application is the background state, a bandwidth of the media data stream in which the matched packet is located may be reduced, that is, a bandwidth for the application to access a network may be reduced; and/or a scheduling priority of the media data stream in which the matched packet is located may be reduced; or
   when the state of the application is the background state, a coding rate of the media data stream in which the matched packet is located may be reduced; for example, preferably, a video coding rate of the media data stream may be reduced, and an audio coding rate may be maintained, thereby ensuring listening experience of a user. In addition, to more effectively reduce network resource occupation of the application in the background state, the coding rate of the media data stream may also be reduced to zero.

In this embodiment, the background state may be one of the following: background running, background suspension, screen lockup, screensaver, screen off, and a state that a user terminal is not used by a user.

It should be noted that adjustment of the coding rate of the media data stream may be obtained by using a different resolution ratio, a different color or color gradation quality, a different coding format, a different algorithm, or the like.

In this embodiment, in the case of limited network resources, because differential processing is performed for a different application state, an application in a foreground state of a same user can obtain sufficient or more resources or a network response may be more timely, or an application in a foreground state of a different user sharing a same network resource can obtain sufficient or more resources or network response may be more timely. In addition, a media source node and a content delivery network through which a data media stream may pass during transmission may also adjust a coding rate of the data media stream according to an application state of an application, thereby improving the network transmission efficiency.

FIG. 2 is a flowchart of another embodiment of a packet processing method according to the present invention. As shown in FIG. 2, an executor of this embodiment is a network-side device, and the method includes:
Step 201: Acquire a description of an application and a state of the application.
   Preferably, the state of the application includes a foreground state and a background state, and the background state includes one of the following: background running, background suspension, screen lockup, screensaver, screen off, and a state that a user terminal is not used by a user.
Step 202: Generate a policy and charging control rule according to prestored configuration information (for example, setting of a rule generating manner predefined by an operator based on time, a position, a user, or the like), the state of the application, and the description of the application.
   Preferably, the policy and charging control rule includes a stream description of the application, service information, and an identifier of the application or includes the stream description of the application, service information, and a service type. The service information may include bandwidth and/or service quality information.
Step 203: Acquire a packet that matches the description of the application.
Step 204: According to the policy and charging control rule, perform service quality control of network resources for a media data stream in which the matched packet is located or perform coding processing for a media data stream in which the matched packet is located.

Preferably, when the state of the application is the foreground state, a specific implementation manner of performing, according to the policy and charging control rule, service quality control of network resources for a media data stream in which the matched packet is located is as follows:
improving a bandwidth of the media data stream in which the matched packet is located; and/or
improving a scheduling priority of the media data stream in which the matched packet is located.

A specific implementation manner of performing, according to the state of the application, coding processing for a media data stream in which the matched packet is located is as follows:
improving a coding rate of the media data stream in which the matched packet is located.

When the state of the application is the background state, a specific implementation manner of performing, according to the policy and charging control rule, service quality control of network resources for a media data stream in which the matched packet is located is as follows:
reducing a bandwidth of the media data stream in which the matched packet is located; and/or
reducing a scheduling priority of the media data stream in which the matched packet is located.

A specific implementation manner of performing, according to the state of the application, coding processing for a media data stream in which the matched packet is located is as follows:
reducing a coding rate of the media data stream in which the matched packet is located.

In this embodiment, a description of an application and a state of the application are acquired, a policy and charging control rule is generated according to prestored configuration information, the state of the application, and the description of the application, a packet that matches the description of the application is acquired, and then according to the policy and charging control rule, service quality control of network resources is performed for a media data stream in which the matched packet is located or coding processing is performed for a media data stream in which the matched packet is located; because differential processing may be performed for a media data stream in which the packet that matches the description of the application in a different application state is located, an application or a process in a foreground state of a same user or an application or a process in a foreground state of a different user of a same network resource can obtain sufficient or more resources or a network response may be more timely in the case of limited network resources; and the network transmission efficiency is effectively improved.

Further, in still another embodiment of the present invention, based on the embodiment shown in FIG. 2, the description of the application may include the identifier of the application and/or the stream description of the application, and step 201 may be implemented in the following specific implementation manners:
First: Parse a first packet in an application layer message at a user plane of the user terminal, capture a packet carrying a network-specific address, and acquire the identifier of the application and the state of the application from the packet carrying the network-specific address; or
parse an application layer packet at the user plane of the user terminal, capture a packet of a network-specific address, acquire the identifier of the application and the state of the application from the packet, and then query a mapping relationship between an identifier of an application and a stream description of an application, so as to acquire the stream description of the application corresponding to the identifier of the application.

Specifically, the network-specific address may be queried and obtained through a domain name server by using an address domain name of a mobile access network gateway acquired when the user terminal interacts with a mobile access network in an earlier stage, or may be a fixed IP (plus a port number) address, for example, 192.168.254.254 (:8899).

Second: Receive the identifier of the application and the state of the application that are sent by the user terminal by using an application layer protocol of the application; or
receive the state of the application that is sent by the user terminal by using the application layer protocol of the application, and identify a second packet in the application layer message at the user plane of the user terminal, so as to acquire the identifier of the application or the stream description of the application; or
receive the identifier of the application and the state of the application that are sent by the user terminal by using the application layer protocol of the application, and query a mapping relationship between an identifier of an application and a stream description of an application, so as to acquire the stream description of the application corresponding to the identifier of the application.

It should be noted that in this embodiment, the second packet is similar to the first packet, and a difference lies in that: An IP address carried in a header of the first packet is a network-specific address; and an IP address carried in a header of the second packet is an IP address acquired by the terminal by resolving its domain name.

Specifically, the state of the application and the identifier of the application of the user terminal or the state of the application is carried by the application layer protocol of the application. Taking that the application layer protocol is the HTTP protocol as an example, a detailed description is as follows:
Preferably, when sending the foregoing request to the mobile access network by using an application layer signaling message such as FORESTATUS or BACKSTATUS, the user terminal may directly indicate an application state of a user terminal application (including a Web application, a web platform application, or a web application page) that accesses a URI. The URI is a network resource that the application accesses.

Alternatively, the application state of the user terminal application that accesses the URI is indicated by using an application layer signaling message such as STATUS, GET, or HEAD, adding a new request header such as Appstatus-foreground and Appstatus-background into the application layer signaling message, and sending a request attached with the request header to the mobile access network.

In addition, the state of the application may also be carried by using another field of the HTTP protocol; or similar extension is performed by using another application layer protocol, for example, FTP, a P2P protocol, the ICA protocol, RDP, or the like, so as to support sending of the state of the application. The another application layer protocol is not enumerated herein.

Third: Receive the identifier of the application and the state of the application that are sent by the user by using an application layer protocol of a specified application; or
receive the state of the application that is sent by the user terminal by using the application layer protocol of the specified application, and identify received packets, so as to acquire the identifier of the application or the stream description of the application; or
receive the identifier of the application and the state of the application that are sent by the user terminal by using the application layer protocol of the specified application, and query a mapping relationship between an identifier of an application and a stream description of an application, so as to acquire the stream description of the application corresponding to the identifier of the application.

In this embodiment, a specified application may be created on the user terminal, and the state of the application or the state of the application and the identifier of the application that need to be sent are sent by using an application layer protocol of the specified application. It should be noted that the application layer protocol of the specified application may be FTP, a P2P protocol, the ICA protocol, RDP, or the like, which is not enumerated herein.

Fourth: Parse a first packet in an application layer message at the user plane of the user terminal, capture a packet carrying a network-specific address, and acquire the identifier of the application, the stream description of the application, and the state of the application from the packet carrying the network-specific address.

Specifically, the network-specific address may be queried and obtained through a domain name server by using an address domain name of a mobile access network gateway acquired when the user terminal interacts with a mobile access network in an earlier stage, or may be a fixed IP (plus a port number) address, for example, 192.168.254.254 (:8899).

Further, in another embodiment of the present invention, based on the embodiment shown in FIG. 2, after step 203, the method may further include:
acquiring a service information identifier corresponding to the matched packet, and encapsulating the service information identifier in the matched packet; and
sending the encapsulated and matched packet to a fixed network or a mobile access network, so that the fixed network or the mobile access network may perform, according to the service information identifier of the matched packet, service quality control of network resources for the media data stream in which the matched packet is located or perform, according to the service information identifier of the matched packet, coding processing for the media data stream in which the matched packet is located.

The service information identifier includes the state of the application or the state of the application and one or a combination of the following: a service type of the matched packet, a user priority, and an operator policy.

For example, in this embodiment, the service information identifier may be in a GTP-U protocol header, a BSSGP protocol header, a PMIP protocol header, or a GRE protocol header that encapsulates a packet and is received by an access network gateway, or may be carried in a DSCP or TOS field of an IP header of a packet.

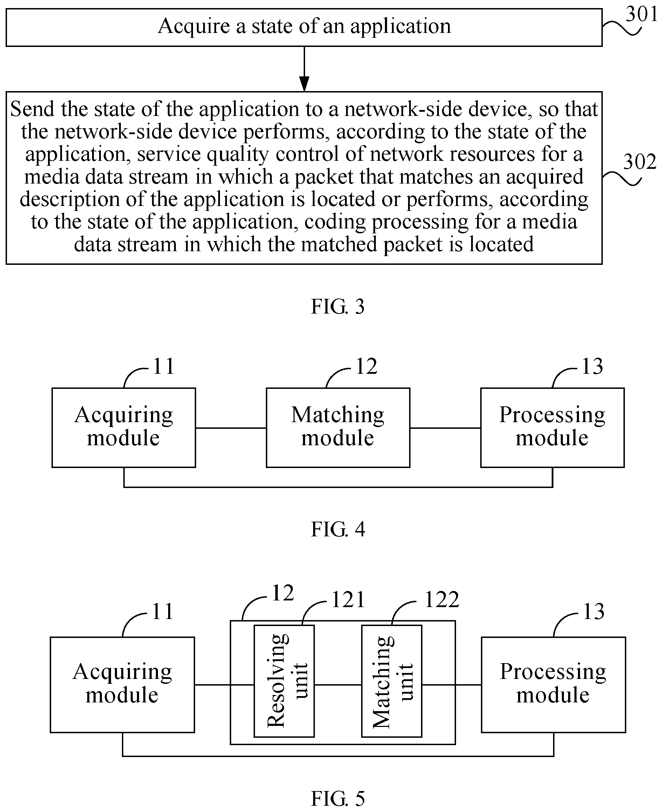

FIG. 3 is a flowchart of still another embodiment of a packet processing method according to the present invention. As shown in FIG. 3, the method of this embodiment includes:
Step 301: Acquire a state of an application.
Step 302: Send the state of the application to a network-side device, so that the network-side device performs, according to the state of the application, service quality control of network resources for a media data stream in which a packet that matches an acquired description of the application is located or performs, according to the state of the application, coding processing for a media data stream in which the matched packet is located.

In this embodiment, a state of the application acquired by a user terminal is sent to a network-side device, so that the network-side device may perform, according to the state of the application, service quality control of network resources for a media data stream in which a packet that matches the acquired description of the application is located or perform, according to the state of the application, coding processing for a media data stream in which the matched packet is located. Because the network-side device may perform differential processing for a media data stream in which the packet that matches the description of the application in a different application state is located, an application or a process in a foreground state of a same user or an application or a process in a foreground state of a different user of a same network resource can obtain sufficient or more resources or a network response may be more timely in the case of limited network resources; and the network transmission efficiency is effectively improved.

Further, in another embodiment of the present invention, based on the embodiment shown in FIG. 3, the method may further include:
acquiring the description of the application, where the description of the application includes an identifier of the application or the identifier of the application and a stream description of the application.

Then, step 302 may specifically be:
sending the description of the application and the state of the application to the network-side device.

In addition, preferably, a specific implementation manner of step 302 is one of the following manners:
sending an application layer message at a user plane of the user terminal to the network-side device, so that the network-side device parses a first packet in the application layer message, captures a packet carrying a network-specific address, and acquires the description of the application and the state of the application from the packet carrying the network-specific address; or
sending an RRC message carrying the description of the application and the state of the application to the network-side device, so that the network-side device acquires the description of the application and the state of the application from the RRC message; or
sending a non-access-stratum message carrying the description of the application and the state of the application to a mobility management entity, where the mobility management entity sends a control plane message carrying the description of the application and the state of the application to the network-side device, so that the network-side device acquires the description of the application and the state of the application from the control plane message; or
sending the state of the application or the identifier of the application and the state of the application by using an application layer protocol of the application; or
sending the state of the application or the identifier of the application and the state of the application by using an application layer protocol of a specified application.

It should be further noted that when the application layer message at the user plane of the user terminal is sent to the network-side device, the network-side device may further identify a second packet in the application layer message, so as to acquire the identifier of the application and the stream description of the application.

The second packet is similar to the first packet, and a difference lies in that: An IP address carried in a header of the first packet is a network-specific address; and an IP address carried in a header of the second packet is an IP address acquired by the terminal by resolving its domain name.

FIG. 4 is a schematic structural diagram of an embodiment of a network-side device according to the present invention. As shown in FIG. 4, the network-side device of this embodiment includes an acquiring module 11, a matching module 12, and a processing module 13, where the acquiring module 11 is configured to acquire a description of an application and a state of the application, the matching module 12 is configured to acquire a packet that matches the description of the application acquired by the acquiring module 11, and the processing module 13 is configured to: according to the state of the application acquired by the acquiring module 11, perform service quality control of network resources for a media data stream in which the matched packet acquired by the matching module 12 is located or perform coding processing for a media data stream in which the matched packet is located.

The network-side device of this embodiment may execute the technical solution of the method embodiment shown in FIG. 1. Its implementation principle is similar, and therefore no further details are provided herein.

It should be further noted that the network-side device of this embodiment may specifically be an access network gateway.

In this embodiment, a description of an application and a state of the application are acquired, a packet that matches the description of the application is acquired, and according to the state of the application, service quality control of network resources is performed for a media data stream in which the matched packet is located or coding processing is performed for a media data stream in which the matched packet is located; because differential processing may be performed for a media data stream in which the packet that matches the description of the application in a different application state is located, an application or a process in a foreground state of a same user or an application or a process in a foreground state of a different user of a same network resource can obtain sufficient or more resources or a network response may be more timely in the case of limited network resources; and the network transmission efficiency is effectively improved.

FIG. 5 is a schematic structural diagram of another embodiment of a network-side device according to the present invention. Based on the embodiment shown in FIG. 4, as shown in FIG. 5, the matching module 12 includes a resolving unit 121 and a matching unit 122, where the resolving unit 121 is configured to parse received packets to acquire service types or host addresses of the received packets, and the matching unit 122 is configured to: when the description of the application acquired by the acquiring module 11 is an identifier of the application, according to a mapping relationship between an identifier of an application and a service type or a mapping relationship between an identifier of an application and a host address, acquire a packet that matches the identifier of the application from the received packets.

Further, in still another embodiment of the present invention, based on the embodiment shown in FIG. 4, the acquiring module 11 is specifically configured to parse a first packet in an application layer message at a user plane of the user terminal, capture a packet carrying a network-specific address, and acquire the description of the application and the state of the application from the packet carrying the network-specific address; or
the acquiring module 11 is specifically configured to acquire the description of the application and the state of the application from a received RRC message that is sent by the user terminal; or
the acquiring module 11 is specifically configured to acquire the description of the application and the state of the application from a received control plane message that is sent by a mobility management entity; or
the acquiring module 11 is specifically configured to receive the identifier of the application and the state of the application that are sent by the user terminal by using an application layer protocol of the application; or
the acquiring module 11 is specifically configured to receive the state of the application that is sent by the user terminal by using the application layer protocol of the application, and identify a second packet in the application layer message at the user plane of the user terminal, so as to acquire the identifier of the application or a stream description of the application; or
the acquiring module 11 is specifically configured to receive the identifier of the application and the state of the application that are sent by the user terminal by using an application layer protocol of a specified application; or
the acquiring module 11 is specifically configured to receive the state of the application that is sent by the user terminal by using the application layer protocol of the specified application, and identify a second packet in the application layer message at the user plane of the user terminal, so as to acquire the identifier of the application or the stream description of the application, where:
the description of the application is the identifier of the application or the stream description of the application.

Further, in another embodiment of the present invention, based on the embodiments of the network-side device, the processing module 13 is specifically configured to, when the state of the application is a foreground state, improve a bandwidth of the media data stream in which the matched packet is located and/or improve a scheduling priority of the media data stream in which the matched packet is located; or
the processing module 13 is specifically configured to: when the state of the application is a foreground state, improve a coding rate of the media data stream in which the matched packet is located.

The processing module 13 is specifically configured to: when the state of the application is a background state, reduce a bandwidth of the media data stream in which the matched packet is located and/or reduce a scheduling priority of the media data stream in which the matched packet is located;
or
the processing module 13 is specifically configured to: when the state of the application is a background state, reduce a coding rate of the media data stream in which the matched packet is located.

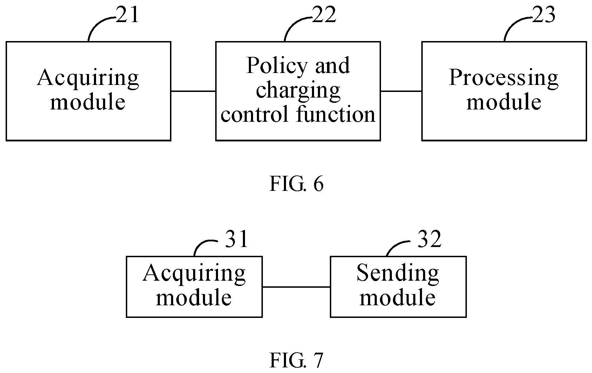

FIG. 6 is a schematic structural diagram of still another embodiment of a network-side device according to the present invention. As shown in FIG. 6, the network-side device of this embodiment includes an acquiring module 21, a policy and charging control function 22, and a processing module 23, where the acquiring module 21 is configured to acquire a description of an application and a state of the application, the policy and charging control function 22 is configured to generate a policy and charging control rule according to prestored configuration information and the state of the application and the description of the application that are acquired by the acquiring module 21, and the processing module 23 is configured to acquire a packet that matches the description of the application acquired by the acquiring module 21, and according to the policy and charging control rule generated by the policy and charging control function 22, perform service quality control of network resources for a media data stream in which the matched packet is located or perform coding processing for a media data stream in which the matched packet is located.

The network-side device of this embodiment may execute the technical solution of the method embodiment shown in FIG. 2. Its implementation principle is similar, and therefore no further details are provided herein.

In addition, the acquiring module 21 may specifically be an application layer server or a service identification functional entity, and the processing module 23 may specifically be a packet data network gateway or another core network gateway.

In this embodiment, a description of an application and a state of the application are acquired, a policy and charging control rule is generated according to prestored configuration information, the state of the application, and the description of the application, a packet that matches the description of the application is acquired, and then according to the policy and charging control rule, service quality control of network resources is performed for a media data stream in which the matched packet is located or coding processing is performed for a media data stream in which the matched packet is located; because differential processing may be performed for a media data stream in which the packet that matches the description of the application in a different application state is located, an application or a process in a foreground state of a same user or an application or a process in a foreground state of a different user of a same network resource can obtain sufficient or more resources or a network response may be more timely in the case of limited network resources; and the network transmission efficiency is effectively improved.

Further, in another embodiment of the present invention, based on the embodiment shown in FIG. 6, the description of the application may include an identifier of the application and/or a stream description of the application, and the acquiring module 21 is specifically configured to parse an application layer packet at a user plane of the user terminal, capture a packet of a network-specific address, and acquire the identifier of the application and the state of the application from the packet; or
the acquiring module 21 is specifically configured to parse a first packet in an application layer message at the user plane of the user terminal, capture a packet carrying a network-specific address, acquire the identifier of the application and the state of the application from the packet carrying the network-specific address, and then query a preset mapping relationship between an identifier of an application and a stream description of an application, so as to acquire the stream description of the application corresponding to the identifier of the application; or
the acquiring module 21 is specifically configured to receive the identifier of the application and the state of the application that are sent by the user terminal by using an application layer protocol of the application; or
the acquiring module 21 is specifically configured to receive the state of the application that is sent by the user terminal by using the application layer protocol of the application, and identify a second packet in the application layer message at the user plane of the user terminal, so as to acquire the identifier of the application or the stream description of the application; or
the acquiring module 21 is specifically configured to receive the identifier of the application and the state of the application that are sent by the user terminal by using the application layer protocol of the application, query a mapping relationship between an identifier of an application and a stream description of an application, so as to acquire the stream description of the application corresponding to the identifier of the application; or
the acquiring module 21 is specifically configured to receive the identifier of the application and the state of the application that are sent by the user by using an application layer protocol of a specified application; or
the acquiring module 21 is specifically configured to receive the identifier of the application and the state of the application that are sent by the user terminal by using the application layer protocol of the specified application, query a mapping relationship between an identifier of an application and a stream description of an application, so as to acquire the stream description of the application corresponding to the identifier of the application; or
the acquiring module 21 is specifically configured to parse a first packet in an application layer message at the user plane of the user terminal, capture a packet carrying a network-specific address, and acquire the identifier of the application, the stream description of the application, and the state of the application from the packet carrying the network-specific address.

In this embodiment, the technical solution of this embodiment is described in detail by taking that the acquiring module 21 may specifically be an application layer server or a service identification functional entity and the processing module 23 may specifically be a packet data network gateway as an example. When acquiring an identifier of an application and a state of the application from a user terminal, the application layer server or the service identification functional entity may query a mapping relationship between an identifier of an application and a service type and a mapping relationship between an identifier of an application and a stream description of an application, so as to acquire a service type corresponding to the identifier of the application and a stream description of the application corresponding to the identifier of the application, and finally send the identifier of the application (or the service type) and the stream description of the application to the policy and charging control function 22. The policy and charging control function 22 generates a policy and charging control rule according to pre-configured information, the identifier of the application (or the service type), and the stream description of the application.

Alternatively, when acquiring an identifier of an application and a state of the application from a user terminal, the application layer server or the service identification functional entity may query a mapping relationship between an identifier of an application and a service type, so as to acquire a service type corresponding to the identifier of the application, and finally send the identifier of the application (or the service type) to the policy and charging control function 22. The policy and charging control function 22 queries a mapping relationship between an identifier of an application (or a service type) and a stream description of an application, so as to acquire a stream description of the application corresponding to the identifier of the application (or the service type), and then generates a policy and charging control rule according to pre-configured information, the identifier of the application (or the service type), and the stream description of the application.

Further, in still another embodiment of the present invention, based on the embodiment shown in FIG. 6, the network-side device further includes an encapsulation processing module, configured to acquire a service information identifier corresponding to the matched packet, encapsulate the service information identifier in the matched packet, and send the encapsulated and matched packet to a fixed network or a mobile access network, so that the fixed network or the mobile access network may perform, according to the service information identifier of the matched packet, service quality control of network resources for the media data stream in which the matched packet is located or perform, according to the service information identifier of the matched packet, coding processing for the media data stream in which the matched packet is located.

The service information identifier includes the state of the application or the state of the application and one or a combination of the following: a service type of the matched packet, a user priority, and an operator policy.

It should be noted that the encapsulation processing module may be a core network gateway, for example, a public data network (Public Data Network; PDN for short) gateway (Gateway; GW for short), a gateway general packet radio service (General Packet Radio Service; GPRS for short) support node (Gateway GPRS Support Node; GGSN for short), an SGSN, or a Serving GW. In addition, the encapsulation processing module may also be arranged in the acquiring module 21.

Further, in another embodiment of the present invention, based on the embodiment shown in FIG. 6, the processing module 23 is specifically configured to: when the policy and charging control rule includes the stream description of the application, service information, and the identifier of the application or includes the stream description of the application, service information, and a service type and the state of the application is a foreground state, improve a bandwidth of the media data stream in which the matched packet is located and/or improve a scheduling priority of the media data stream in which the matched packet is located;
or
the processing module 23 is specifically configured to: when the policy and charging control rule includes the stream description of the application, service information, and the identifier of the application or includes the stream description of the application, service information, and a service type and the state of the application is a foreground state, improve a coding rate of the media data stream in which the matched packet is located.

The processing module 23 is specifically configured to: when the policy and charging control rule includes the stream description of the application, service information, and the identifier of the application or includes the stream description of the application, service information, and a service type and the state of the application is a background state, reduce a bandwidth of the media data stream in which the matched packet is located and/or reduce a scheduling priority of the media data stream in which the matched packet is located;
or
the processing module 23 is specifically configured to, when the policy and charging control rule includes the stream description of the application, service information, and the identifier of the application or includes the stream description of the application, service information, and a service type and the state of the application is a background state, reduce a coding rate of the media data stream in which the matched packet is located.

FIG. 7 is a schematic structural diagram of an embodiment of a user terminal according to the present invention. As shown in FIG. 7, the user terminal of this embodiment includes an acquiring module 31 and a sending module 32, where the acquiring module 31 is configured to acquire a state of an application, and the sending module 32 is configured to send the state of the application acquired by the acquiring module 31 to a network-side device, so that the network-side device performs, according to the state of the application, service quality control of network resources for a media data stream in which a packet that matches an acquired description of the application is located or performs, according to the state of the application, coding processing for a media data stream in which the matched packet is located.

The user terminal of this embodiment may execute the technical solution of the method embodiment shown in FIG. 3. Its implementation principle is similar, and therefore no further details are provided herein.

In this embodiment, a state of the application acquired by a user terminal is sent to a network-side device, so that the network-side device may perform, according to the state of the application, service quality control of network resources for a media data stream in which a packet that matches the acquired description of the application is located or perform, according to the state of the application, coding processing for a media data stream in which the matched packet is located. Because the network-side device may perform differential processing for a media data stream in which the packet that matches the description of the application in a different application state is located, an application or a process in a foreground state of a same user or an application or a process in a foreground state of a different user of a same network resource can obtain sufficient or more resources or a network response may be more timely in the case of limited network resources; and the network transmission efficiency is effectively improved.

Further, in another embodiment of the present invention, based on the embodiment shown in FIG. 7, the acquiring module 31 is further configured to acquire the description of the application, where the description of the application includes an identifier of the application or the identifier of the application and a stream description of the application. The sending module 32 is specifically configured to send the description of the application and the state of the application to the network-side device.

In addition, preferably, the sending module 32 is specifically configured to send an application layer message at a user plane of the user terminal to the network-side device, so that the network-side device parses a first packet in the application layer message, captures a packet carrying a network-specific address, and acquires the description of the application and the state of the application from the packet carrying the network-specific address; or
the sending module 32 is specifically configured to send an RRC message carrying the description of the application and the state of the application to the network-side device, so that the network-side device acquires the description of the application and the state of the application from the RRC message; or
the sending module 32 is specifically configured to send a non-access-stratum message carrying the description of the application and the state of the application to a mobility management entity, where the mobility management entity sends a control plane message carrying the description of the application and the state of the application to the network-side device, so that the network-side device acquires the description of the application and the state of the application from the control plane message; or
the sending module 32 is specifically configured to send the state of the application or the identifier of the application and the state of the application by using an application layer protocol of the application;
or
the sending module 32 is specifically configured to send the state of the application or the identifier of the application and the state of the application by using an application layer protocol of a specified application.

In this embodiment, for example, a manner of acquiring a description of an application and a state of the application is as follows: For an application visible to a terminal operating system, a description of the application and a state of the application may be provided by the operating system to a radio protocol stack or another application of the user terminal; for an application (for example, a Web application) invisible to the terminal operating system, a Web platform application (generally being a browser) may be provided to a radio protocol stack or another application.

In addition, an occasion for sending a description of an application and a state of the application is as follows: A user may switch between different applications, that is, an application in a foreground state and an application in a background state may change frequently; an application that has just switch from the foreground state to the background state may switch back to the foreground state, and an application that has just switch from the background state to the foreground state may also switch back to the background state; if such a switch occurs frequently and each change of an application in the foreground state and the background state is notified to a network-side device, which not only increases signaling and processing load between a user terminal and the network-side device, but also does not help to improve the network resource utilization and user experience. Therefore, the user terminal may immediately send a notification or locally perform some filtering processing each time when a state of an application changes. The user terminal may delay reporting when a state of an application changes frequently or send a notification until the state becomes steady, so as to prevent ping-pong effect. In addition, the user terminal may also record a behavior of the user and a characteristic of an application and perform special processing (not reporting a state change or reporting a specific state all the time) for such an application. The user terminal may also provide a human-machine interface for the user to set whether to report states of applications, whether to report a state of an application, whether to report an application as a certain state all the time, and the like.

The present invention further provides a packet processing system, including a user terminal and a network-side device. The user terminal may be the user terminal shown in FIG. 7 and may execute the technical solution of the method embodiment shown in FIG. 3; and the network-side device may be the network-side device shown in FIG. 4 or FIG. 5 or may also be the network-side device shown in FIG. 6. Its implementation principle is similar, and therefore no further details are provided herein.

Persons of ordinary skill in the art may understand that, all or a part of the steps of the foregoing method embodiments may be implemented by a program instructing relevant hardware. The foregoing program may be stored in a computer readable storage medium. When the program runs, the steps of the forgoing method embodiments are performed. The foregoing storage medium may include any mediums capable of storing program code, such as a ROM, a RAM, a magnetic disk, or an optical disc.

It should be noted that in the foregoing user equipment and base station embodiments, all units included are classified only according to functions and logic, but the present invention is not limited to the classification as long as a corresponding function can be implemented. In addition, a specific name of each functional unit is used to distinguish each other only, but not used to limit the protection scope of the present invention.

Finally, it should be noted that the foregoing embodiments are merely intended for describing the technical solutions of the present invention rather than limiting the present invention. Although the present invention is described in detail with reference to the foregoing embodiments, persons of ordinary skill in the art should understand that they may still make modifications to the technical solutions described in the foregoing embodiments, or make equivalent replacements to some or all the technical features thereof, as long as the modifications and replacements do not cause the essence of corresponding technical solutions to depart from the scope of the claims of the present invention.

## Claims

1. A packet processing method, comprising:
acquiring (201) a description of an application and a state of the application;
generating (202) a policy and charging control rule according to prestored configuration information, the state of the application, and the description of the application;
acquiring (203) a packet that matches the description of the application; and
according to the policy and charging control rule, performing (204) service quality control of network resources for a media data stream in which the matched packet is located or performing coding processing for a media data stream in which the matched packet is located;
**characterized in that**:
after acquiring a packet that matches the description of the application, the method further comprises:
acquiring a service information identifier corresponding to the matched packet, and encapsulating the service information identifier in the matched packet; and
sending the encapsulated and matched packet to a fixed network or a mobile access network, so that the fixed network or the mobile access network may perform, according to the service information identifier of the matched packet, service quality control of network resources for the media data stream in which the matched packet is located or perform, according to the service information identifier of the matched packet, coding processing for the media data stream in which the matched packet is located; wherein:
the service information identifier comprises the state of the application or the state of the application and one or a combination of the following: a service type of the matched packet, a user priority, and an operator policy;
wherein performing coding processing comprises:
when the state of the application is a foreground state, improving a coding rate of the media data stream in which the matched packet is located; and
when the state of the application is in a background state, reducing a coding rate of the media data stream in which the matched packet is located.

2. The method according to claim 1, wherein the description of the application comprises an identifier of the application and/or a stream description of the application, and then the acquiring a description of an application and a state of the application comprises:
resolving a first packet in an application layer message at a user plane of the user terminal, capturing a packet carrying a network-specific address, and acquiring the identifier of the application and the state of the application from the packet carrying the network-specific address; or
resolving the first packet, capturing a packet carrying a network-specific address, acquiring the identifier of the application and the state of the application from the packet carrying the network-specific address, and then querying a preset mapping relationship between an identifier of an application and a stream description of an application, so as to acquire the stream description of the application corresponding to the identifier of the application; or
receiving the identifier of the application and the state of the application that are sent by the user terminal by using an application layer protocol of the application; or
receiving the state of the application that is sent by the user terminal by using the application layer protocol of the application, and identifying a second packet in the application layer message at the user plane of the user terminal, so as to acquire the identifier of the application or the stream description of the application; or
receiving the identifier of the application and the state of the application that are sent by the user terminal by using the application layer protocol of the application, and querying a mapping relationship between an identifier of an application and a stream description of an application, so as to acquire the stream description of the application corresponding to the identifier of the application; or
receiving the identifier of the application and the state of the application that are sent by the user by using an application layer protocol of a specified application; or
receiving the state of the application that is sent by the user terminal by using the application layer protocol of the specified application, and identifying received packets, so as to acquire the identifier of the application or the stream description of the application; or
receiving the identifier of the application and the state of the application that are sent by the user terminal by using the application layer protocol of the specified application, and querying a mapping relationship between an identifier of an application and a stream description of an application, so as to acquire the stream description of the application corresponding to the identifier of the application; or
resolving the first packet, capturing a packet carrying a network-specific address, and acquiring the identifier of the application, the stream description of the application, and the state of the application from the packet carrying the network-specific address.

3. A network-side device, comprising:
an acquiring module (21), configured to acquire a description of an application and a state of the application;
a policy and charging control function (22), configured to generate a policy and charging control rule according to prestored configuration information and the state of the application and the description of the application that are acquired by the acquiring module (21); and
a processing module (23), configured to acquire a packet that matches the description of the application acquired by the acquiring module (21), and according to the policy and charging control rule generated by the policy and charging control function, perform service quality control of network resources for a media data stream in which the matched packet is located or perform coding processing for a media data stream in which the matched packet is located;
**characterized in that** the device further comprises:
encapsulation processing module, configured to, after acquiring a packet that matches the description of the application, acquire a service information identifier corresponding to the matched packet, and encapsulating the service information identifier in the matched packet; and
send the encapsulated and matched packet to a fixed network or a mobile access network, so that the fixed network or the mobile access network may perform, according to the service information identifier of the matched packet, service quality control of network resources for the media data stream in which the matched packet is located or perform, according to the service information identifier of the matched packet, coding processing for the media data stream in which the matched packet is located; wherein:
the service information identifier comprises the state of the application or the state of the application and one or a combination of the following: a service type of the matched packet, a user priority, and an operator policy;
wherein performing coding processing comprises:
when the state of the application is a foreground state, improving a coding rate of the media data stream in which the matched packet is located; and
when the state of the application is in a background state, reducing a coding rate of the media data stream in which the matched packet is located.

4. The network-side device according to claim 3, wherein the acquiring module (21) is specifically configured to parse a first packet in an application layer message at a user plane of the user terminal, capture a packet of a network-specific address, and acquire an identifier of the application and the state of the application from the packet; or
the acquiring module (21) is specifically configured to parse a first packet in an application layer message at the user plane of the user terminal, capture a packet carrying a network-specific address, acquire the identifier of the application and the state of the application from the packet carrying the network-specific address, and then query a preset mapping relationship between an identifier of an application and a stream description of an application, so as to acquire a stream description of the application corresponding to the identifier of the application; or
the acquiring module (21) is specifically configured to receive the identifier of the application and the state of the application that are sent by the user terminal by using an application layer protocol of the application; or
the acquiring module (21) is specifically configured to receive the state of the application that is sent by the user terminal by using the application layer protocol of the application, and identify a second packet in the application layer message at the user plane of the user terminal, so as to acquire the identifier of the application or a stream description of the application; or
the acquiring module (21) is specifically configured to receive the identifier of the application and the state of the application that are sent by the user terminal by using the application layer protocol of the application, and query an mapping relationship between an identifier of an application and a stream description of an application, so as to acquire the stream description of the application corresponding to the identifier of the application; or
the acquiring module (21) is specifically configured to receive the identifier of the application and the state of the application that are sent by the user by using an application layer protocol of a specified application; or
the acquiring module (21) is specifically configured to receive the identifier of the application and the state of the application that are sent by the user terminal by using the application layer protocol of the specified application, and query an mapping relationship between an identifier of an application and a stream description of an application, so as to acquire the stream description of the application corresponding to the identifier of the application; or
the acquiring module (21) is specifically configured to parse the first packet, capture a packet carrying a network-specific address, and acquire the identifier of the application, the stream description of the application, and the state of the application from the packet carrying the network-specific address, wherein:
the description of the application comprises the identifier of the application and/or the stream description of the application.

## Patentansprüche

1. Paketverarbeitungsverfahren, das Folgendes umfasst:
Erlangen (201) einer Beschreibung einer Anwendung und eines Zustands der Anwendung;
Erzeugen (202) einer Richtlinie und Ladungssteuerungsregel, gemäß den zuvor gespeicherten Konfigurationsinformationen, dem Zustand der Anwendung und der Beschreibung der Anwendung;
Erlangen (203) eines Pakets, das zu der Beschreibung der Anwendung passt; und gemäß der Richtlinie und der Ladungssteuerungsregel, Durchführen (204) der Dienstqualitätssteuerung von Netzwerkressourcen für einen Mediendatenstrom, in welchem sich das abgeglichene Paket befindet oder Durchführen der Codierungsverarbeitung für einen Mediendatenstrom, in welchem sich das abgeglichene Paket befindet;
**dadurch gekennzeichnet, dass**
nach dem Erlangen eines Pakets, welches zu der Beschreibung der Anwendung passt, das Verfahren des Weiteren Folgendes umfasst:
Erlangen einer Dienstinformationenkennung, die dem abgeglichenen Paket entspricht, und Verkapseln der Dienstinformationenkennung in dem abgeglichenen Paket; und
Senden des verkapselten und abgeglichenen Pakets an ein festes Netzwerk oder ein mobiles Zugangsnetzwerk, so dass das feste Netzwerk oder das mobile Zugangsnetzwerk, gemäß der Dienstinformationenkennung des abgeglichenen Pakets, Dienstqualitätssteuerung von Netzwerkressourcen für den Mediendatenstrom durchführen kann, in welchem sich das abgeglichene Paket befindet, oder, gemäß der Dienstinformationenkennung des abgeglichenen Pakets, die Codierungsverarbeitung für den Mediendatenstrom durchführen kann, in welchem sich das abgeglichene Paket befindet; wobei:
die Dienstinformationenkennung den Zustand der Anwendung oder den Zustand der Anwendung und eins oder eine Kombination von Folgendem umfasst: einen Diensttyp des abgeglichenen Pakets, eine Benutzerpriorität und eine Betreiberrichtlinie;
wobei das Durchführen der Codierungsverarbeitung Folgendes umfasst:
wenn es sich bei dem Zustand der Anwendung um einen Vordergrundzustand handelt, Verbessern einer Codierungsgeschwindigkeit des Mediendatenstromes, in welchem sich das abgeglichene Paket befindet; und
wenn es sich bei dem Zustand der Anwendung um einen Hintergrundzustand handelt, Reduzieren einer Codierungsgeschwindigkeit des Mediendatenstromes, in welchem sich das abgeglichene Paket befindet.

2. Verfahren nach Anspruch 1, wobei die Beschreibung der Anwendung eine Kennung der Anwendung und/oder eine Strombeschreibung der Anwendung umfasst, und danach das Erlangen einer Beschreibung einer Anwendung und eines Zustands der Anwendung Folgendes umfasst:
Auflösen eines ersten Pakets in einer Anwendungsschichtmitteilung auf einer Benutzerebene des Teilnehmerendgeräts,
Aufnehmen eines Pakets, das eine netzwerkspezifische Adresse transportiert, und Erlangen der Kennung der Anwendung und des Zustands der Anwendung aus dem Paket, das die netzwerkspezifische Adresse transportiert; oder
Auflösen des ersten Pakets, Aufnehmen eines Pakets, das eine netzwerkspezifische Adresse transportiert, Erlangen der Kennung der Anwendung und des Zustands der Anwendung aus dem Paket, das die netzwerkspezifische Adresse transportiert, und danach Abfragen einer zuvor eingestellten Abbildungsbeziehung zwischen einer Kennung einer Anwendung und einer Strombeschreibung einer Anwendung, so dass die Strombeschreibung der Anwendung entsprechend der Kennung der Anwendung erlangt wird; oder
Empfangen der Kennung der Anwendung und des Zustands der Anwendung, die durch das Benutzerendgerät unter Verwendung eines Anwendungsschichtprotokolls der Anwendung gesendet werden; oder
Empfangen des Zustands der Anwendung, der durch das Benutzerendgerät unter Verwendung des Anwendungsschichtprotokolls der Anwendung gesendet wird, und Identifizieren eines zweiten Pakets in der Anwendungsschichtmitteilung auf der Benutzerebene des Benutzerendgerätes, so dass die Kennung der Anwendung oder die Strombeschreibung der Anwendung erlangt wird; oder
Empfangen der Kennung der Anwendung und des Zustands der Anwendung, die durch das Benutzerendgerät unter Verwendung des Anwendungsschichtprotokolls der Anwendung gesendet werden, und Abfragen einer Abbildungsbeziehung zwischen einer Kennung einer Anwendung und einer Strombeschreibung einer Anwendung, so dass die Strombeschreibung der Anwendung entsprechend der Kennung der Anwendung erlangt wird; oder
Empfangen der Kennung der Anwendung und des Zustands der Anwendung, die durch den Benutzer unter Verwendung eines Anwendungsschichtprotokolls einer spezifizierten Anwendung gesendet werden; oder
Empfangen des Zustands der Anwendung, der durch das Benutzerendgerät unter Verwendung des Anwendungsschichtprotokolls der spezifizierten Anwendung gesendet wird, und Identifizieren der empfangenen Pakete, so dass die Kennung der Anwendung oder die Strombeschreibung der Anwendung erlangt wird; oder
Empfangen der Kennung der Anwendung und des Zustands der Anwendung, die durch das Benutzerendgerät unter Verwendung des Anwendungsschichtprotokolls der spezifizierten Anwendung gesendet werden, und Abfragen einer Abbildungsbeziehung zwischen einer Kennung einer Anwendung und einer Strombeschreibung einer Anwendung, so dass die Strombeschreibung der Anwendung entsprechend der Kennung der Anwendung erlangt wird; oder
Auflösen des ersten Pakets, Aufnehmen eines Pakets, das eine netzwerkspezifische Adresse transportiert, und Erlangen der Kennung der Anwendung, der Strombeschreibung der Anwendung und des Zustands der Anwendung aus dem Paket, das die netzwerkspezifische Adresse transportiert.

3. Netzwerkseitige Vorrichtung, die Folgendes umfasst:
ein Erlangungsmodul (21), das dazu ausgestaltet ist, eine Beschreibung einer Anwendung und einen Zustand der Anwendung zu erlangen;
eine Richtlinien- und Ladungssteuerungsfunktion (22), die dazu ausgestaltet ist, eine Richtlinie und Ladungssteuerungsregel gemäß den zuvor gespeicherten Konfigurationsinformationen und dem Zustand der Anwendung und der Beschreibung der Anwendung zu erzeugen, die durch das Erlangungsmodul (21) erlangt werden; und
ein Verarbeitungsmodul (23), das dazu ausgestaltet ist, ein Paket zu erlangen, das zu der Beschreibung der Anwendung passt, die durch das Erlangungsmodul (21) erlangt wird, und gemäß der Richtlinie und der Ladungssteuerungsregel, die durch die Richtlinien- und Ladungssteuerungsfunktion erzeugt werden, die Dienstqualitätssteuerung von Netzwerkressourcen für einen Mediendatenstrom durchzuführen, in welchem sich das abgeglichene Paket befindet, oder Codierungsverarbeitung für einen Mediendatenstrom durchzuführen, in welchem sich das abgeglichene Paket befindet;
**dadurch gekennzeichnet, dass** die Vorrichtung des Weiteren Folgendes umfasst:
das Verkapselungsverarbeitungsmodul, das dazu ausgestaltet ist, nach dem Erlangen eines Pakets, das zu der Beschreibung der Anwendung passt, eine Dienstinformationenkennung zu erlangen, die dem abgeglichenen Paket entspricht, und die Dienstinformationenkennung in dem abgeglichenen Paket zu verkapseln; und Senden des verkapselten und abgeglichenen Pakets an ein festes Netzwerk oder ein mobiles Zugangsnetzwerk, so dass das feste Netzwerk oder das mobile Zugangsnetzwerk gemäß der Dienstinformationenkennung des abgeglichenen Pakets Dienstqualitätssteuerung von Netzwerkressourcen für den Mediendatenstrom durchführen kann, in welchem sich das abgeglichene Paket befindet, oder, gemäß der Dienstinformationenkennung des abgeglichenen Pakets, die Codierungsverarbeitung für den Mediendatenstrom durchführen kann, in welchem sich das abgeglichene Paket befindet; wobei:
die Dienstinformationenkennung den Zustand der Anwendung oder den Zustand der Anwendung und eins oder eine Kombination von Folgendem umfasst: einen Diensttyp des abgeglichenen Pakets, eine Benutzerpriorität und eine Betreiberrichtlinie;
wobei das Durchführen der Codierungsverarbeitung Folgendes umfasst:
wenn es sich bei dem Zustand der Anwendung um einen Vordergrundzustand handelt, Verbessern einer Codierungsgeschwindigkeit des Mediendatenstromes, in welchem sich das abgeglichene Paket befindet; und
wenn es sich bei dem Zustand der Anwendung um einen Hintergrundzustand handelt, Reduzieren einer Codierungsgeschwindigkeit des Mediendatenstromes, in welchem sich das abgeglichene Paket befindet.

4. Netzwerkseitige Vorrichtung nach Anspruch 3, wobei das Erlangungsmodul (21) speziell dazu ausgestaltet ist, ein erstes Paket in einer Anwendungsschichtmitteilung auf einer Benutzerebene des Benutzerendgerätes zu zergliedern, ein Paket einer netzwerkspezifischen Adresse aufzunehmen, und eine Kennung der Anwendung und den Zustand der Anwendung aus dem Paket zu erlangen; oder
das Erlangungsmodul (21) speziell dazu ausgestaltet ist, ein erstes Paket in einer Anwendungsschichtmitteilung auf der Benutzerebene des Benutzerendgerätes zu zergliedern, ein Paket, das eine netzwerkspezifische Adresse transportiert, aufzunehmen, die Kennung der Anwendung und den Zustand der Anwendung aus dem Paket zu erlangen, das die netzwerkspezifische Adresse transportiert, und danach eine zuvor eingestellte Abbildungsbeziehung zwischen einer Kennung einer Anwendung und einer Strombeschreibung einer Anwendung abzufragen, so dass eine Strombeschreibung der Anwendung entsprechend der Kennung der Anwendung erlangt wird; oder
das Erlangungsmodul (21) speziell dazu ausgestaltet ist, die Kennung der Anwendung und den Zustand der Anwendung, die durch das Benutzerendgerät unter Verwendung eines Anwendungsschichtprotokolls der Anwendung gesendet werden, zu empfangen; oder
das Erlangungsmodul (21) speziell dazu ausgestaltet ist, den Zustand der Anwendung zu empfangen, der durch das Benutzerendgerät unter Verwendung des Anwendungsschichtprotokolls der Anwendung gesendet wird, und ein zweites Paket in der Anwendungsschichtmitteilung auf der Benutzerebene des Benutzerendgerätes zu identifizieren, so dass die Kennung der Anwendung oder eine Strombeschreibung der Anwendung erlangt wird; oder
das Erlangungsmodul (21) speziell dazu ausgestaltet ist, die Kennung der Anwendung und den Zustand der Anwendung zu empfangen, die durch das Benutzerendgerät unter Verwendung des Anwendungsschichtprotokolls der Anwendung gesendet werden, und eine Abbildungsbeziehung zwischen einer Kennung einer Anwendung und einer Strombeschreibung einer Anwendung abzufragen, so dass die Strombeschreibung der Anwendung entsprechend der Kennung der Anwendung erlangt wird; oder
das Erlangungsmodul (21) speziell dazu ausgestaltet ist, die Kennung der Anwendung und den Zustand der Anwendung zu empfangen, die durch den Benutzer unter Verwendung eines Anwendungsschichtprotokolls einer spezifizierten Anwendung gesendet werden; oder
das Erlangungsmodul (21) speziell dazu ausgestaltet ist, die Kennung der Anwendung und den Zustand der Anwendung zu empfangen, die durch das Benutzerendgerät unter Verwendung des Anwendungsschichtprotokolls der spezifizierten Anwendung gesendet werden, und eine Abbildungsbeziehung zwischen einer Kennung einer Anwendung und einer Strombeschreibung einer Anwendung abzufragen, so dass die Strombeschreibung der Anwendung entsprechend der Kennung der Anwendung erlangt wird; oder
das Erlangungsmodul (21) speziell dazu ausgestaltet ist, das erste Paket zu zergliedern, ein Paket aufzunehmen, das eine netzwerkspezifische Adresse transportiert, und die Kennung der Anwendung, die Strombeschreibung der Anwendung und den Zustand der Anwendung aus dem Paket, das die netzwerkspezifische Adresse transportiert, zu erlangen, wobei:
die Beschreibung der Anwendung die Kennung der Anwendung und/oder die Strombeschreibung der Anwendung umfasst.

## Revendications

1. Procédé de traitement de paquet, consistant à :
acquérir (201) une description d'une application et un état de l'application ;
générer (202) une règle de contrôle de stratégie et de tarification selon une information de configuration préstockée, l'état de l'application et la description de l'application ;
acquérir (203) un paquet qui est apparié à la description de l'application ; et
selon la règle de contrôle de stratégie et de tarification, réaliser (204) un contrôle de qualité de service des ressources de réseau pour un flux de données multimédia dans lequel se trouve le paquet apparié ou réaliser un traitement de codage pour un flux de données multimédia dans lequel se trouve le paquet apparié ;
**caractérisé en ce que** :
après l'acquisition d'un paquet qui est apparié à la description de l'application, le procédé consiste en outre à :
acquérir un identifiant d'information de service correspondant au paquet apparié, et
encapsuler l'identifiant d'information de service dans le paquet apparié ; et
envoyer le paquet encapsulé et apparié à un réseau fixe ou un réseau d'accès mobile, de sorte que le réseau fixe ou le réseau d'accès mobile puisse réaliser, selon l'identifiant d'information de service du paquet apparié, un contrôle de qualité de service des ressources de réseau pour le flux de données multimédia dans lequel se trouve le paquet apparié, ou réaliser, selon l'identifiant d'information de service du paquet apparié, un traitement de codage pour le flux de données multimédia dans lequel se trouve le paquet apparié ; dans lequel :
l'identifiant d'information de service comprend l'état de l'application ou l'état de l'application et un paramètre ou une combinaison de paramètres parmi : un type de service du paquet apparié, une priorité d'utilisateur et une stratégie d'opérateur ;
la réalisation d'un traitement de codage consistant à :
quand l'état de l'application est un état en avant-plan, améliorer un taux de codage du flux de données multimédia dans lequel se trouve le paquet apparié ; et
quand l'état de l'application est un état en arrière-plan, réduire un taux de codage du flux de données multimédia dans lequel se trouve le paquet apparié.

2. Procédé selon la revendication 1, dans lequel la description de l'application comprend un identifiant de l'application et/ou une description de flux de l'application, puis l'acquisition d'une description d'application et d'un état de l'application consiste à :
résoudre un premier paquet dans un message de couche applicative au niveau d'un plan d'utilisateur du terminal d'utilisateur, capturer un paquet transportant une adresse spécifique d'un réseau, et acquérir l'identifiant de l'application et l'état de l'application à partir du paquet transportant l'adresse spécifique d'un réseau ; ou
résoudre le premier paquet, capturer un paquet transportant une adresse spécifique d'un réseau, acquérir l'identifiant de l'application et l'état de l'application à partir du paquet transportant l'adresse spécifique d'un réseau, puis interroger une relation de correspondance prédéfinie entre un identifiant d'une application et une description de flux d'une application, de manière à acquérir la description de flux de l'application correspondant à l'identifiant de l'application ; ou
recevoir l'identifiant de l'application et l'état de l'application qui sont envoyés par le terminal d'utilisateur au moyen d'un protocole de couche applicative de l'application ; ou
recevoir l'état de l'application qui est envoyé par le terminal d'utilisateur au moyen du protocole de couche applicative de l'application, et identifier un second paquet dans le message de couche applicative au niveau du plan d'utilisateur du terminal d'utilisateur, de manière à acquérir l'identifiant de l'application ou la description de flux de l'application ; ou
recevoir l'identifiant de l'application et l'état de l'application qui sont envoyés par le terminal d'utilisateur au moyen du protocole de couche applicative de l'application, et interroger une relation de correspondance entre un identifiant d'une application et une description de flux d'une application, de manière à acquérir la description de flux de l'application correspondant à l'identifiant de l'application ; ou
recevoir l'identifiant de l'application et l'état de l'application qui sont envoyés par l'utilisateur au moyen d'un protocole de couche applicative d'une application spécifiée ; ou
recevoir l'état de l'application qui est envoyé par le terminal d'utilisateur au moyen du protocole de couche applicative de l'application spécifiée, et identifier des paquets reçus, de manière à acquérir l'identifiant de l'application ou la description de flux de l'application ; ou
recevoir l'identifiant de l'application et l'état de l'application qui sont envoyés par le terminal d'utilisateur au moyen du protocole de couche applicative de l'application spécifiée, et interroger une relation de correspondance entre un identifiant d'une application et une description de flux d'une application, de manière à acquérir la description de flux de l'application correspondant à l'identifiant de l'application ; ou
résoudre le premier paquet, capturer un paquet transportant une adresse spécifique d'un réseau, et acquérir l'identifiant de l'application, la description de flux de l'application et l'état de l'application à partir du paquet transportant l'adresse spécifique d'un réseau.

3. Dispositif côté réseau, comprenant :
un module d'acquisition (21), conçu pour acquérir une description d'une application et un état de l'application ;
une fonction de contrôle de stratégie et de tarification (22), conçue pour générer une règle de contrôle de stratégie et de tarification selon une information de configuration préstockée et l'état de l'application et la description de l'application qui sont acquis par le module d'acquisition (21) ; et
un module de traitement (23), conçu pour acquérir un paquet qui est apparié à la description de l'application acquise par le module d'acquisition (21), et selon la règle de contrôle de stratégie et de tarification générée par la fonction de contrôle de stratégie et de tarification, réaliser un contrôle de qualité de service des ressources de réseau pour un flux de données multimédia dans lequel se trouve le paquet apparié ou réaliser un traitement de codage pour un flux de données multimédia dans lequel se trouve le paquet apparié ;
le dispositif étant **caractérisé en ce qu'**il comprend en outre :
un module de traitement d'encapsulation, conçu pour, après l'acquisition d'un paquet qui est apparié à la description de l'application, acquérir un identifiant d'information de service correspondant au paquet apparié, et encapsuler l'identifiant d'information de service dans le paquet apparié ; et
envoyer le paquet encapsulé et apparié à un réseau fixe ou un réseau d'accès mobile, de sorte que le réseau fixe ou le réseau d'accès mobile puisse réaliser, selon l'identifiant d'information de service du paquet apparié, un contrôle de qualité de service des ressources de réseau pour le flux de données multimédia dans lequel se trouve le paquet apparié, ou réaliser, selon l'identifiant d'information de service du paquet apparié, un traitement de codage pour le flux de données multimédia dans lequel se trouve le paquet apparié ; dans lequel :
l'identifiant d'information de service comprend l'état de l'application ou l'état de l'application et un paramètre ou une combinaison de paramètres parmi : un type de service du paquet apparié, une priorité d'utilisateur et une stratégie d'opérateur ;
la réalisation d'un traitement de codage consistant à :
quand l'état de l'application est un état en avant-plan, améliorer un taux de codage du flux de données multimédia dans lequel se trouve le paquet apparié ; et
quand l'état de l'application est un état en arrière-plan, réduire un taux de codage du flux de données multimédia dans lequel se trouve le paquet apparié.

4. Dispositif côté réseau selon la revendication 3, dans lequel le module d'acquisition (21) est spécifiquement conçu pour analyser un premier paquet dans un message de couche applicative au niveau d'un plan d'utilisateur du terminal d'utilisateur, capturer un paquet d'une adresse spécifique d'un réseau, et acquérir un identifiant de l'application et l'état de l'application à partir du paquet ; ou
le module d'acquisition (21) est spécifiquement conçu pour analyser un premier paquet dans un message de couche applicative au niveau du plan d'utilisateur du terminal d'utilisateur, capturer un paquet transportant une adresse spécifique d'un réseau, acquérir l'identifiant de l'application et l'état de l'application à partir du paquet transportant l'adresse spécifique d'un réseau, puis interroger une relation de correspondance prédéfinie entre un identifiant d'une application et une description de flux d'une application, de manière à acquérir une description de flux de l'application correspondant à l'identifiant de l'application ; ou
le module d'acquisition (21) est spécifiquement conçu pour recevoir l'identifiant de l'application et l'état de l'application qui sont envoyés par le terminal d'utilisateur au moyen d'un protocole de couche applicative de l'application ; ou
le module d'acquisition (21) est spécifiquement conçu pour recevoir l'état de l'application qui est envoyé par le terminal d'utilisateur au moyen du protocole de couche applicative de l'application, et identifier un second paquet dans le message de couche applicative au niveau du plan d'utilisateur du terminal d'utilisateur, de manière à acquérir l'identifiant de l'application ou une description de flux de l'application ; ou
le module d'acquisition (21) est spécifiquement conçu pour recevoir l'identifiant de l'application et l'état de l'application qui sont envoyés par le terminal d'utilisateur au moyen du protocole de couche applicative de l'application, et interroger une relation de correspondance entre un identifiant d'une application et une description de flux d'une application, de manière à acquérir la description de flux de l'application correspondant à l'identifiant de l'application ; ou
le module d'acquisition (21) est spécifiquement conçu pour recevoir l'identifiant de l'application et l'état de l'application qui sont envoyés par l'utilisateur au moyen d'un protocole de couche applicative d'une application spécifiée ; ou
le module d'acquisition (21) est spécifiquement conçu pour recevoir l'identifiant de l'application et l'état de l'application qui sont envoyés par le terminal d'utilisateur au moyen du protocole de couche applicative de l'application spécifiée, et interroger une relation de correspondance entre un identifiant d'une application et une description de flux d'une application, de manière à acquérir la description de flux de l'application correspondant à l'identifiant de l'application ; ou
le module d'acquisition (21) est spécifiquement conçu pour analyser le premier paquet, capturer un paquet transportant une adresse spécifique d'un réseau, et acquérir l'identifiant de l'application, la description de flux de l'application et l'état de l'application à partir du paquet transportant l'adresse spécifique d'un réseau,
la description de l'application comprenant l'identifiant de l'application et/ou la description de flux de l'application.
